# EUROPÄISCHE PATENTANMELDUNG

(11) **EP 1 923 664 A1**
(43) Veröffentlichungstag der Anmeldung: **21.05.2008**
(21) Anmeldenummer: 07022264.1
(22) Anmeldetag: 17.11.2007
(51) Int. Cl.: G01B 11/24

(54) **Anordnung zur Erfassung von Oberflächenkonturen an Objekten, insbesondere im zahnmedizinischen Bereich**

(30) Priorität: 19.11.2006 DE 102006054716
(71) Anmelder: Heraeus Kulzer GmbH, 63450 Hanau (DE)
(72) Erfinder: Kordaß, Bernd, Prof. Dr. med. dent., 17498 Neuenkirchen (DE); Busch, Matthias, Dipl.-Ing. (FH), 63450 Hanau (DE)
(74) Vertreter: Wolf, Jens

(57) **Zusammenfassung**

Die Erfindung betrifft eine Anordnung zur Erfassung von Oberflächenkonturen von Objekten, insbesondere im zahnmedizinischen Bereich zur Generierung eines virtuellen 3D-Modells, mit einer Energiequelle, deren Energieabgabe auf die Oberfläche des Objektes gerichtet erfolgt, um Energie in das Objekt einzubringen.

Erfindungsgemäß ist ein Sensor (6) auf der der Energiequelle (1) abgewandten Seite des Objektes (2) zur Erfassung der Intensität der aus dem Objekt (2) austretenden Energie vorgesehen. Der in einem Energiedifferenz-Modul (8) ermittelten, im Objekt absorbierten Energie wird in einer Referenzeinheit (9) die Schichtdicke des Objektes (2) zugeordnet, um über die Schichtdicke als Höheninformation bezogen auf die Eintrittsfläche (4) der Energie in das Objekt (2) die betreffende Oberflächenkontur (10) abzubilden.

## Beschreibung

Die Erfindung betrifft eine Anordnung zur Erfassung von Oberflächenkonturen an Objekten, insbesondere im zahnmedizinischen Bereich, gemäß Patentanspruch 1.

Die Erfassung von Oberflächenkonturen dient unter anderem der Bestimmung der Oberflächenrauhigkeit oder des Grades und der Form einer Profilierung von Materialien. In vielen Fällen ist auch die aufeinander gerichtete Kontur von Objekten von wesentlicher Bedeutung, so im zahnmedizinischen Bereich die Lagerelation von in Oberkiefer und Unterkiefer befindlichen Zähnen.

Aus der DE 197 09 050 A1 ist eine Anordnung zur bildhaften, farblichen Erfassung von räumlichen Gegenständen mit einem Flachbettscanner bekannt, bei der eine Zusatzoptik zum Einsatz kommt. Mit dieser Zusatzoptik wird eine Vergrößerung des Objektabstandes erreicht, so dass räumliche Objekte in ausreichendem Abstand vom Scanner auf einem drehbaren Objektträger angeordnet werden können. Mit dem drehbaren Objektträger wird das Objekt unter verschiedenen Ansichten digital erfasst. Eine geeignete Software erzeugt daraufhin dreidimensionale Datensätze von der Objektoberfläche.

Eine solche Lösung eignet sich für die Erfassung farbiger, räumlicher Objekte, jedoch ist eine exakte Bestimmung der verschiedenen Drehwinkel, unter denen das Objekt optisch erfasst worden ist, nicht ohne Weiteres möglich, so dass eine hinreichend genaue Kombination der Einzelbilder zu einem Gesamtbild zumindest erschwert wird.

Weiterhin wird in der DE 198 19 992 A1 eine Einrichtung zur Herstellung von dreidimensionalen Aufnahmen von Gegenständen mittels optischer Scanner und ein Verfahren zur dreidimensionalen Objekterfassung beschrieben. Bei einem solchen Verfahren wird der Gegenstand zeitlich aufeinanderfolgend und/oder gleichzeitig in zwei oder mehreren Aufnahmemodi erfasst, wonach die erfassten Daten gespeichert und zu einem räumlichen Modell rechnermäßig verarbeitet werden.

Die Realisierung einer solchen Lösung ist infolge der Notwendigkeit einer exakte Bestimmung der Relativlage des Objektes zur optischen Scan-Einrichtung aufwändig, insbesondere dann, wenn das betreffende Objekt zeitversetzt in verschiedenen Positionen von der Scan-Einrichtung erfasst werden muss.

Der Erfindung liegt die Aufgabe zugrunde, Oberflächenkonturen an Objekten relativ zu dem betreffenden Objekt mit vergleichsweise einfachen Mitteln erfassen und auswerten zu können.

Erfindungsgemäß wird die Aufgabe bei einer Anordnung zur Erfassung von Oberflächenkonturen von Objekten gemäß dem Oberbegriff des Patentanspruchs 1 dadurch gelöst, dass das Objekt oder dessen in der Außenkontur übereinstimmende Abformung aus einem energieabsorbierenden Material besteht, dass ein Sensor auf der der Energiequelle abgewandten Seite des Objektes zur Erfassung der Intensität der aus dem Objekt austretenden Energie vorgesehen ist, und dass ein, der Erfassung der im Objekt absorbierten Energie dienender Energiedifferenz-Modul und eine Referenzeinheit vorgesehen sind, in der der funktionale Zusammenhang zwischen der vom Objekt oder der Abformung absorbierten Energie und der Schichtdicke im Wesentlichen senkrecht zur Eintrittsfläche der Energie in das Objekt oder die Abformung abgebildet ist, so dass ausgehend von der in das Objekt eingebrachten Energieintensität auf der Grundlage der aus dem Objekt austretenden Restenergie die im Objekt absorbierte Energie im Energiedifferenz-Modul erfasst und die Schichtdicke in Korrelation zur Intensitätsminderung der Energie beim Durchgang durch das Objekt oder die Abformung in der Referenzeinheit ermittelt wird, um über die Schichtdicke als Höheninformation bezogen auf die Eintrittsfläche der Energie in das Objekt oder die Abformung die betreffende Oberflächenkontur abzubilden.

Mit der Erfindung wird die Möglichkeit geschaffen, Oberflächenkonturen von Objekten effizient und in hoher Genauigkeit auf der Grundlage der Energieabsorption im Objekt, in einem Modell des Objektes oder in einer Abformung des Objektes oder des Modells zu erfassen.

In einer bevorzugten Ausführungsform der Erfindung weist ein Oberflächenbereich des Objektes eine definierte geometrische Form auf, die als Ebene oder Kalotte ausgebildet sein kann und bevorzugt auf der Eintrittsseite der Energie in das Objekt vorgesehen ist.

Das Objekt oder dessen Abformung kann aus Segmenten gebildet und in diese zerlegbar sein, wobei zweckmäßig an mindestens einem Segment des Objektes oder der Abformung eine definierte geometrische Form, wie eine Ebene oder Kalotte, vorgesehen ist.

In Ausgestaltung der Erfindung ist die Energiequelle eine elektromagnetische Strahlungsquelle, die einen bestimmten Wellenlängenbereich oder eine vorbestimmte Wellenlänge emittiert. Auch kann es sich bei der Energiequelle um eine Schallquelle handeln.

Zur Bereitstellung von Referenzwerten ist es zweckmäßig, dem Objekt oder dessen Abformung einen Prüfkörper übereinstimmender Materialzusammensetzung und -struktur mit bezogen auf die Eintrittsfläche der Energie unterschiedlicher Dicke zuzuordnen.

Weiterhin kann die Anordnung eine Haltevorrichtung zur Positionierung des Objektes oder dessen Abformung in einer für einen Energieeintrag geeigneten Lage aufweisen. Die Haltevorrichtung steht dabei bevorzugt in definierter Lagebeziehung zu dem Sensor, der die aus dem Objekt oder der Abformung desselben austretende Energie erfasst.

Es besteht des Weiteren die Möglichkeit, dass das Objekt oder dessen Abformung zur Steuerung eines definierten Energieeintrages und eines reproduzierbaren Energieabsorptionsverhaltens im Objekt oder der Abformung von einem Medium mit definierten Transmissionsparametern umgeben ist.

Die Anordnung findet vorrangig im zahnmedizinischen Bereich Verwendung. Insbesondere kommt sie für eine Erfassung, Darstellung, Dokumentation, Archivierung und/oder Analyse von Kiefer- oder Zahnmodellen, von Kiefer- oder Zahnabformungen, von Bissregistraten, von Biss- bzw. Kieferrelationsregistraten und/oder von Präparationen der Zähne zum Einsatz.

In weiterer Ausgestaltung der Erfindung erfolgt die Abformung des Objektes in einer Abformeinrichtung, die zumindest einen ebenen, vorzugsweise aus transparentem Material bestehenden Bereich aufweist und als Abformlöffel oder Abformplatte ausgebildet sein kann.

Die Abformeinrichtung besteht zweckmäßig aus mehreren, sich in definierter Lage zueinander befindenden, lösbar gefügten Teilen.

Den Teilen der Abformeinrichtung können Segmente der Abformung zugeordnet sein. So besteht einerseits die Möglichkeit die Oberflächenkontur des Objektes als in der Abformung abgebildete Negativkontur über die Energieabsorption in einzelnen oder mehreren Segmenten der Abformung zu erfassen.

Andererseits kann aber auch die Negativkontur der Abformung erfasst werden, indem die Energie in mindestens ein Teil der Abformeinrichtung und in das zugehörige, vorzugsweise mit dem betreffenden Teil der Abformeinrichtung verbundene Segment der Abformung eingetragen und die Gesamtenergieabsorption erfasst wird.

Dabei sind zweckmäßig die für Abformeinrichtung und Abformung eingesetzten Materialien hinsichtlich ihres Energie-Transmissionsverhaltens aufeinander abgestimmt.

Die Erfindung soll nachfolgend anhand eines Ausführungsbeispieles mit zugehörigen Zeichnungen näher erläutert werden.

Es zeigen
- Fig. 1: eine schematische Darstellung einer Anordnung zur Erfassung von Oberflächenkonturen eines zahnmedizinischen Objektes,
- Fig. 2: ein in eine Abformmasse eingebettetes zahnmedizinisches Objekt,
- Fig. 3: eine Abformeinrichtung zur Abformung eines Oberkiefers und
- Fig. 4: eine mit einer Abformeinrichtung gemäß Fig. 3 erzeugte Oberkiefer-Abformung, aus mehreren Segmenten bestehend.

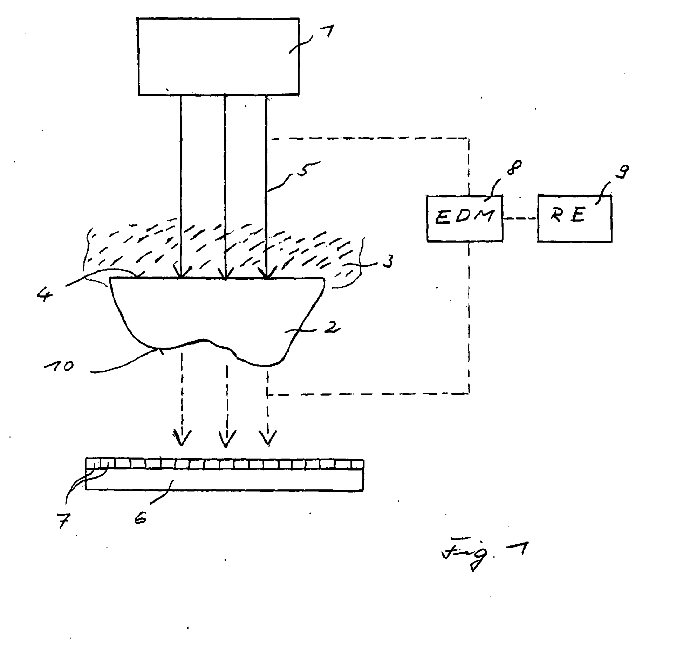

Die schematische Darstellung in Fig. 1 zeigt eine Energiequelle 1, die Licht einer bestimmten Wellenlänge in Richtung auf ein Zahnmodell 2 abstrahlt, das aus einem Energie absorbierenden, transluzenten Material besteht.

Das Zahnmodell 2 ist von einem Medium 3, beispielsweise einem Gel oder Silikonöl, umhüllt zur Anpassung der Lichteintrittsparameter, wie etwa dem Brechungsindex, an das gewählte Material und die optischen Eigenschaften des Zahnmodells 2, und weist auf der der Energiequelle 1 zugewandten Seite eine ebene Lichteintrittsfläche 4 auf.

Die von der Energiequelle 1 ausgehende Lichtstrahlung trifft im Wesentlichen senkrecht, wie mit Pfeilen 5 verdeutlicht, auf die Lichteintrittsfläche 4 des Zahnmodells 2 auf, durchdringt dieses unter Energieverlust und wird von einem, auf der der Energiequelle 1 abgewandten Seite des Zahnmodells 2 befindlichen Sensor 6 erfasst.

Der Sensor 6 erstreckt sich flächig senkrecht zur Zeichenebene und weist eine Vielzahl von Sensorelementen 7 in einem zweidimensionalen Raster auf, denen Flächenbereiche entsprechender Größe auf der im Wesentlichen parallel verlaufenden Lichteintrittsfläche 4 des Zahnmodells 2 zugeordnet sind. Von den derart der Lichteintrittsfläche 4 zugeordneten Sensorelementen 7 wird jeweils die Restenergie der Strahlung nach Austritt aus dem Zahnmodell 2 erfasst.

In einem Energiedifferenz-Modul 8 erfolgt auf der Grundlage der von der Energiequelle 1 ausgehenden und in das Zahnmodell 2 eingebrachten Energie und der aus dem Zahnmodell 2. austretenden, von den Sensorelementen 7 erfassten Restenergie eine Bestimmung der im Zahnmodell. 2 absorbierten Energie.

Auf der Grundlage des in einer Referenzeinheit 9 gespeicherten, funktionalen Zusammenhanges zwischen absorbierter Energie im Zahnmodell 2 und der Dicke des Zahnmodells 2 wird eine Höheninformation bezogen auf das jeweilige Sensorelement 7 generiert. In Verbindung mit der bekannten Zuordnung der Sensorelemente 7 zu korrespondierenden Flächenbereichen der Lichteintrittsfläche 4 erfolgt die virtuelle Erfassung der Oberflächenkontur 10 des Zahnmodells 2.

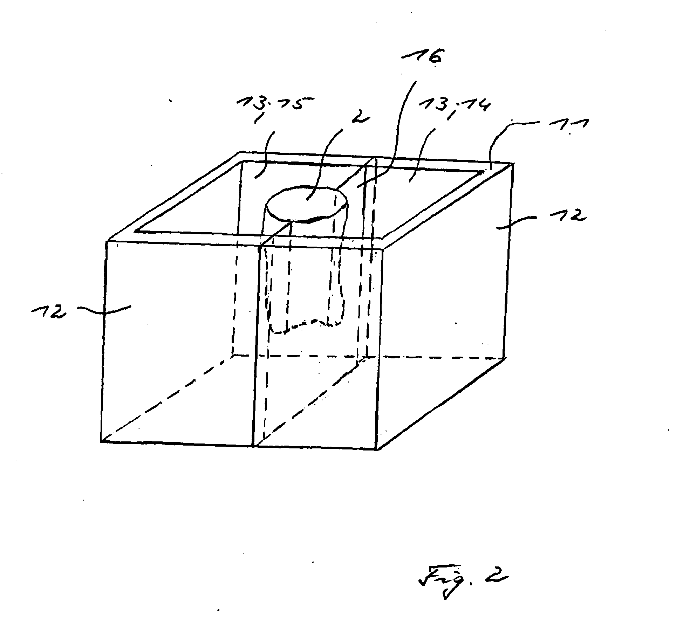

Falls eine geeignete Lichteintrittsfläche 4 für die Strahlung nicht vorgesehen ist oder sich hinsichtlich der abzubildenden Konturen nicht schaffen lässt, besteht die Möglichkeit, wie in Fig. 2 dargestellt, das Zahnmodell 2 in einem quader- oder würfelförmigen Hohlkörper 11 mit ebenen oder anderweitig in ihrem Verlauf bestimmten Seitenflächen 12 anzuordnen. Der Zwischenraum zwischen dem Zahnmodell 2 und den Seitenflächen 12 des Hohlkörpers 11 ist mit Abformmaterial gefüllt, so dass die entstehende Abformung 13 sowohl die Oberfläche des Zahnmodells 2 als auch die Innenwandung des Hohlkörpers 11 abbildet. Die Formgebung der Innenwandung des Hohlkörpers 11 bestimmt damit die Lichteintrittsfläche 4 der Abformung 13.

Zur Erfassung der Oberflächenkontur 10 des Zahnmodells 2 wird die Abformung 13 in Segmente 14 und 15 getrennt, wobei die Trennebene zweckmäßig durch eine Zwischenlage 16 oder eine Folienbahn realisiert ist.

Aus den Segmenten 14 und 15 der Abformung 13 wird mittels der beschriebenen Anordnung zur Erfassung von Oberflächenkonturen die Negativkontur des Zahnmodells 2 ermittelt.

Die Oberflächenkontur 10 des Zahnmodells 2 kann danach aus der Negativkontur der für den Anwendungsfall relevanten Segmente durch Einsatz bekannter Software bestimmt werden.

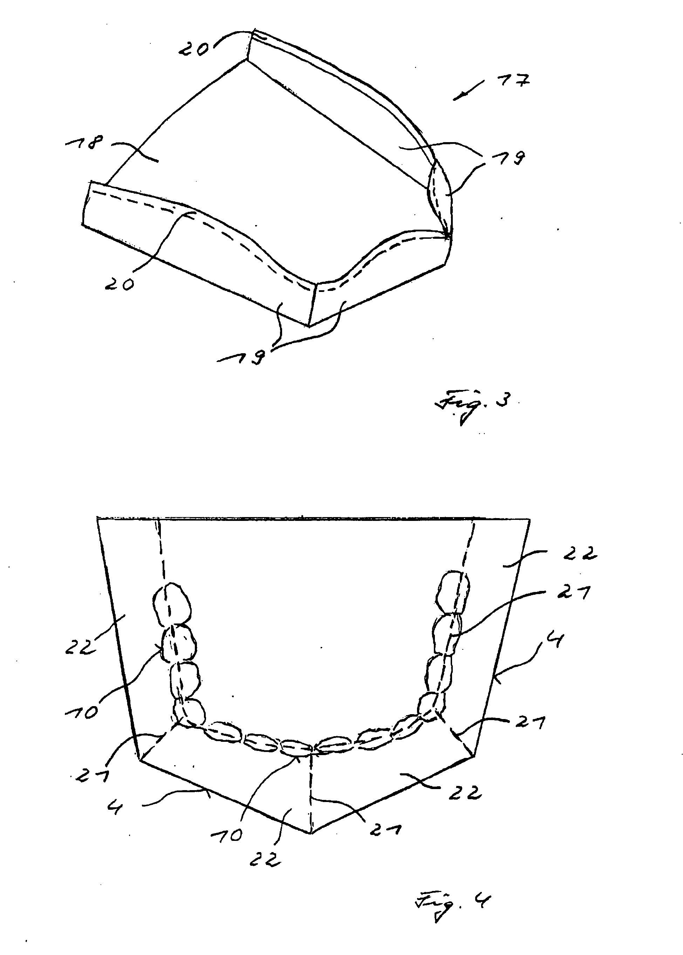

Zur Erfassung der Oberflächenkonturen 10 mehrerer Zähne und von Kieferbereichen kann als hohlkörperähnliche Abformeinrichtung ein Abformlöffel 17 zum Einsatz kommen. Gemäß Fig. 3 besteht der Abformlöffel 17 zur Abformung des Oberkiefers aus einem ebenen Löffelboden 18 und ebenen Wandelementen 19, deren Randzonen 20 gemäß den anatomischen Bedingungen geformt sind. Der Löffelboden 18 und die Wandelemente 19 bestehen aus transparentem Material und sind lösbar miteinander verbunden, so dass der Löffelboden 18, wie auch die Wandelemente 19, jeweils separat mit Abformmaterial zur Herstellung einer Negativ-Abformung versehen werden und unabhängig voneinander bezüglich der zu erfassenden Oberflächenkontur 10 des zahnmedizinischen Objektes ausgewertet werden können.

Weiterhin zeigt Fig. 4 eine in einem Abformlöffel 17 gemäß Fig. 3 hergestellte Abformung 13 der Zähne eines Oberkiefers. Die Abformung 13 ist durch bis zum Löffelboden 18 verlaufende Trennschnitte 21 segmentiert, wobei die Trennschnitte 21 sowohl im Bereich der Abformung 13 der Zähne als auch radial nach außen derart gerichtet verlaufen, dass die entstehenden Segmente 22 separat oder in einer gewünschten Zusammenstellung für die Bestimmung der Negativ-Oberflächenkontur zur Verfügung stehen.

Da der Abformlöffel 17 mehrteilig ausgebildet ist, besteht auch die Möglichkeit, die Segmente 22 der Abformmasse 13 jeweils verbunden mit einem Wandelement 19 zu separieren und die Negativ-Oberflächenkontur der betreffenden Teilabformung zu erfassen.

## Patentansprüche

1. Anordnung zur Erfassung von Oberflächenkonturen von Objekten, insbesondere im zahnmedizinischen Bereich zur Generierung eines virtuellen 3D-Modells, mit einer Energiequelle, deren Energieabgabe auf die Oberfläche des Objektes gerichtet erfolgt, um Energie in das Objekt einzubringen, **dadurch gekennzeichnet, dass** das Objekt (2) oder dessen in der Außenkontur übereinstimmende Abformung (13) aus einem energieabsorbierenden Material besteht, dass ein Sensor (6) auf der der Energiequelle (1) abgewandten Seite des Objektes (2) zur Erfassung der Intensität der aus dem Objekt (2) austretenden Energie vorgesehen ist, und dass ein, der Erfassung der im Objekt (2) absorbierten Energie dienender Energiedifferenz-Modul (8) und eine Referenzeinheit (9) vorgesehen sind, in der der funktionale Zusammenhang zwischen der vom Objekt (2) oder der Abformung (13) absorbierten Energie und der Schichtdicke im Wesentlichen senkrecht zur Eintrittsfläche (4) der Energie in das Objekt (2) oder die Abformung (13) abgebildet ist, so dass ausgehend von der in das Objekt (2) eingebrachten Energieintensität auf der Grundlage der aus dem Objekt (2) austretenden Restenergie die im Objekt (2) absorbierte Energie im Energiedifferenz-Modul (8) erfasst und die Schichtdicke in Korrelation zur Intensitätsminderung der Energie beim Durchgang durch das Objekt (2) oder die Abformung (13) in der Referenzeinheit (9) ermittelt wird, um über die Schichtdicke als Höheninformation bezogen auf die Eintrittsfläche (4) der Energie in das Objekt (2) oder die Abformung (13) die betreffende Oberflächenkontur (10) abzubilden.

2. Anordnung zur Erfassung von Oberflächenkonturen nach Anspruch 1, **dadurch gekennzeichnet, dass** ein Oberflächenbereich (4) des Objektes (2) eine definierte geometrische Form aufweist.

3. Anordnung zur Erfassung von Oberflächenkonturen nach Anspruch 2, **dadurch gekennzeichnet, dass** die definierte geometrische Form des Oberflächenbereiches des Objektes (2) als Ebene (4) oder Kalotte ausgebildet ist.

4. Anordnung zur Erfassung von Oberflächenkonturen nach Anspruch 2 oder 3, **dadurch gekennzeichnet, dass** die definierte geometrische Form eines Oberflächenbereiches (4) des Objektes (2) auf der Eintrittsseite der Energie in das Objekt (2) vorgesehen ist.

5. Anordnung zur Erfassung von Oberflächenkonturen nach Anspruch 1, **dadurch gekennzeichnet, dass** das Objekt (2) oder dessen Abformung (13) aus Segmenten (14, 15) gebildet und in diese zerlegbar ist.

6. Anordnung zur Erfassung von Oberflächenkonturen nach Anspruch 5, **dadurch gekennzeichnet, dass** an mindestens einem Segment (14, 15) des Objektes (2) oder der Abformung (13) eine definierte geometrische Form, wie eine Ebene (4, 21) oder Kalotte, vorgesehen ist.

7. Anordnung zur Erfassung von Oberflächenkonturen nach Anspruch 1, **dadurch gekennzeichnet, dass** die Energiequelle (1) eine elektromagnetische Strahlungsquelle ist, die einen bestimmten Wellenlängenbereich oder eine vorbestimmte Wellenlänge emittiert.

8. Anordnung zur Erfassung von Oberflächenkonturen nach Anspruch 1, **dadurch gekennzeichnet, dass** es sich bei der Energiequelle (1) um eine Schallquelle handelt.

9. Anordnung zur Abbildung von Oberflächenkonturen nach Anspruch 1, **dadurch gekennzeichnet, dass** dem Objekt (2) oder dessen Abformung (13) ein Prüfkörper übereinstimmender Materialzusammensetzung und -struktur mit bezogen auf die Eintrittsfläche der Energie unterschiedlicher Dicke zugeordnet ist.

10. Anordnung zur Abbildung von Oberflächenkonturen nach Anspruch 1, **dadurch gekennzeichnet, dass** die Anordnung eine Haltevorrichtung zur Positionierung des Objektes (2) oder dessen Abformung (13) in einer für einen Energieeintrag geeigneten Lage aufweist.

11. Anordnung zur Abbildung von Oberflächenkonturen nach Anspruch 10, **dadurch gekennzeichnet, dass** die Haltevorrichtung in definierter Lagebeziehung zu dem Sensor (6) steht, der die aus dem Objekt (2) oder der Abformung (13) desselben austretende Energie erfasst.

12. Anordnung zur Abbildung von Oberflächenkonturen nach Anspruch 10 oder 11, **dadurch gekennzeichnet, dass** das Objekt (2) oder dessen Abformung (13) zur Steuerung eines definierten Energieeintrages und eines reproduzierbaren Energieabsorptionsverhaltens im Objekt (2) oder der Abformung (13) von einem Medium (3) mit definierten Transmissionsparametern umgeben ist.

13. Anordnung zur Abbildung von Oberflächenkonturen nach Anspruch 1, **dadurch gekennzeichnet, dass** die Anordnung im zahnmedizinischen Bereich Verwendung findet.

14. Anordnung zur Abbildung von Oberflächenkonturen nach Anspruch 13, **dadurch gekennzeichnet, dass** diese für eine Erfassung, Darstellung, Dokumentation, Archivierung und/oder Analyse von Kiefer- oder Zahnmodellen, von Kiefer- oder Zahnabformungen, von Bissregistraten, von Biss- bzw. Kieferrelationsregistraten und/oder von Präparationen der Zähne zum Einsatz kommt.

15. Anordnung zur Abbildung von Oberflächenkonturen nach Anspruch 13 oder 14, **dadurch gekennzeichnet, dass** die Abformung des Objektes (2) in einer Abformeinrichtung (17), die zumindest einen ebenen Bereich (18, 19) aufweist, erfolgt.

16. Anordnung zur Abbildung von Oberflächenkonturen nach Anspruch 15, **dadurch gekennzeichnet, dass** die Abformeinrichtung als Abformlöffel (17) oder Abformplatte ausgebildet ist.

17. Anordnung zur Abbildung von Oberflächenkonturen nach Anspruch 15, **dadurch gekennzeichnet, dass** der ebene Bereich (18, 19) aus transparentem Material besteht.

18. Anordnung zur Abbildung von Oberflächenkonturen nach Anspruch 15, **dadurch gekennzeichnet, dass** die Abformeinrichtung (17) aus mehreren, sich in definierter Lage zueinander befindenden, lösbar gefügten Teilen (18, 19) besteht.

19. Anordnung zur Abbildung von Oberflächenkonturen nach Anspruch 18, **dadurch gekennzeichnet, dass** Teilen (18, 19) der Abformeinrichtung (17) Segmente (14, 15, 22) der Abformung (13) zugeordnet sind.
